# EUROPEAN PATENT SPECIFICATION

(11) **EP 3 309 298 B1**
(45) Date of publication and mention of the grant of the patent: **15.04.2020**
(21) Application number: 15895350.5
(22) Date of filing: 18.08.2015
(51) Int. Cl.: E01D 19/10

(54) **TRAVELLING MECHANISM FOR BRIDGE DETECTION VEHICLE, AND BRIDGE DETECTION VEHICLE**
FAHRMECHANISMUS FÜR BRÜCKENERKENNUNGSFAHRZEUG UND BRÜCKENERKENNUNGSFAHRZEUG
MÉCANISME DE DÉPLACEMENT POUR VÉHICULE DE DÉTECTION DE PONT, ET VÉHICULE DE DÉTECTION DE PONT

(30) Priority: 15.06.2015 CN 201510342739
(43) Date of publication of application: 18.04.2018
(73) Proprietor: Xuzhou Construction Machinery Group Co., Ltd., Xuzhou, Jiangsu 221004 (CN)
(72) Inventor: MA, Hongfeng, Xuzhou Jiangsu 221004 (CN); HAN, Meng, Xuzhou Jiangsu 221004 (CN); LI, Xueling, Xuzhou Jiangsu 221004 (CN); LI, Genwen, Xuzhou Jiangsu 221004 (CN)
(74) Representative: Osterhoff, Utz
(86) International application number: PCT/CN2015/087331
(87) International publication number: WO 2016/201777

(56) References cited:
- EP-A1- 2 677 080
- CN-A- 102 101 437
- CN-U- 201 530 992
- CN-U- 201 721 451
- CN-U- 202 214 677
- CN-U- 202 214 677
- CN-U- 203 427 920
- US-A- 1 853 576

## Description

### Technical Field

The disclosure relates to the field of engineering machinery, and in particular to a bridge inspection vehicle traveling mechanism and a bridge inspection vehicle.

### Background

A bridge inspection vehicle is a special vehicle that can provide a working platform for bridge inspectors to perform the flow inspection and maintenance operation on the bridges, wherein the traveling mechanism for the bridge inspection vehicle is mainly composed of a frame, a support leg, a cylinder and rollers. In such traveling mechanism, the vertical distance between the rollers and the ground is changed by adjusting the extention and retraction of the cylinder, the support legs are retracted in the non-working state, and extended in the working state so that the rollers are supported on the ground to effectuate load bearing function, and the traveling operation of the bridge inspection vehicle is accomplished by driving of the rollers.

At present, the traveling mechanism for the bridge inspection vehicle mainly includes two types as follows:
In one of the two types, the cylinder and the support leg are hinged to the frame respectively, the other end of the cylinder is hinged to the support leg at a position in vicinity of the middle end, and the rollers are hinged to the other end of the support leg; and the vertical distance between the rollers and the ground is changed by extension and retraction of the cylinder to thereby achieve the load bearing function.

In order to meet the requirement for lifting height of the traveling mechanism, the cylinder and the support leg are needed to be hinged to the frame respectively at very large angle. The vertical load transmitted by the rollers may be transmitted to the support leg and the cylinder, and the load of the support leg and the cylinder are greater than the vertical load, resulting in that the load at the hinge points between the cylinder and the frame, and between the support leg and the frame are excessively large and the structures in the vicinity of the hinge points are prone to crack and damage.

In the other one of the two types, a vertical cylinder is provided, wherein one end of the vertical cylinder is hinged to the rollers, and the other end of the vertical cylinder is connected with the frame. By controlling the vertical extension and retraction of the vertical cylinder, the rollers can be lifted and lowered, then the supporting and retraction of the traveling mechanism is accomplished. In the thus-configured traveling mechanism, the vertical load transmitted by the rollers may be transmitted directly to the frame, thus superior to the first type of the travelling mechanism in the aspect of stressed means. However, as such traveling mechanism is spaced from the ground at a certain height in the non-working state, the cylinder is needed to have a large stroke and accordingly a space needs to be reserved above the frame for installation of the cylinder, thereby reducing the upper slewing space of the carriage and affecting the exertion of the upper functions of the carriage.

CN 202 214 677 U discloses a bridge inspection vehicle supporting leg which is considered as bridge inspection traveling mechanism. Said supporting leg comprises a frame 1, a traveling member 7 and a linear telescopic mechanism 2, 3, 6, for driving the traveling member to be retracted upwardly or to be grounded downwardly, one end of said linea telescopic mechanism being hinged to the frame 1 and the other end thereof being hinged to the traveling member 7. The supporting leg further comprises a second cylinder 4, 5 for driving the linear telescopic mechanism to be lifted upwards obliquely or to be perpendicular to the ground downwardly, one end of said second cylinder being hinged to the frame 1 and the other end thereof being rotatable connected to an exterior of the linear telescopic mechanism.

US 1 853 576 A discloses an improvement in semi-trailers and practically is concerned to a front end carriage for supporting the front end of a trailer body when the trailer is unattached to a truck.

### Summary

The disclosure provides a bridge inspection vehicle traveling mechanism and a bridge inspection vehicle, which may not affect the upper slewing space of the carriage and can reduce the load at the hinge point to some extent.

The bridge inspection vehicle traveling mechanism according to the invention includes: a frame; a traveling member; a linear telescopic mechanism, one end thereof being hinged to the frame and the other end thereof being hinged to the traveling member, and the linear telescopic mechanism for driving the traveling member to be retracted upwardly or to be grounded downwardly; a second cylinder, one end thereof being hinged to the frame and the other end thereof being rotatable connected to an exterior of the linear telescopic mechanism, the second cylinder for driving the linear telescopic mechanism to be lifted upwards obliquely or to be perpendicular to the ground downwardly.

Preferably, the linear telescopic mechanism is a first cylinder, a cylinder barrel thereof being hinged to the frame, and a cylinder rod thereof being hinged to the traveling member.

Preferably, the linear telescopic mechanism is a telescopic leg structure, including a support leg hinged to the frame and a telescopic leg extendable or retractable within the support leg; within the support leg and the telescopic leg is provided a first cylinder, a cylinder barrel of the first cylinder being hinged to the frame or the support leg , and a cylinder rod of the first cylinder connected to the telescopic leg ; and the telescopic leg is configured to be driven to extend or retract relative to the support leg by the extension or retraction of the cylinder rod of the first cylinder.

According to the invention, the bridge inspection vehicle traveling mechanism further includes a link rod, a cylinder barrel of the second cylinder being hinged to the frame, a cylinder rod of the second cylinder being hinged to one end of the link rod, and the other end of the link rod being hinged to the exterior of the linear telescopic mechanism.

According to the invention, the bridge inspection vehicle traveling mechanism further includes a slider and a slide rail, the slide rail being fixedly connected to a lower surface of the frame , and the slider being slidable along the slide rail and being hinged to the cylinder rod of the second cylinder.

According to the invention, the slide rail includes a top plate fixedly connected to the lower surface of the frame, two side plates for enclosing the slider arranged at two sides of the top plate repsecitvely, the bottom portions of the two side plates both extend inwardly to form two bottom plates for supporting the slider, and between the two bottom plates is formed a gap for allowing running of the link rod .

Preferably, the slider includes two slide plates slidable on the two bottom plates respectively, the two slide plates being connected by a connecting plate and having a hinge shaft penetrated therethrough, the link rod being hinged with the cylinder rod of the second cylinder through the hinge shaft, and between the two slide plates is also formed a gap for allowing running of the link rod .

Preferably, the linear telescopic mechanism is hinged to a first support arranged on the frame, the second cylinder is hinged to a second support arranged on the frame and is hinged to a lug arranged on the exterior of the linear telescopic mechanism.

Preferably, the second support includes two vertical support plates connected by a transverse support plate, the transverse support plate being welded to the frame , the cylinder barrel of the second cylinder being arranged between the two vertical support plates, and the two vertical support plates being hinged to the cylinder barrel of the second cylinder by a hinge shaft.

Preferably, the traveling member is a roller structure, including a roller carrier hinged to the first cylinder and rollers arranged inside the roller carrier.

Preferably, a slider group is fixedly arranged in the support leg, the telescopic leg is configured to contact and be slidable relative to the support leg through the slider group .

Some embodiments further provide a bridge inspection vehicle including a bridge inspection vehicle traveling mechanism according to any one of the proceeding items.

Based on the above technical solution, the disclosure has at least the following advantageous effects:
In the bridge inspection vehicle traveling mechanism provided according to the invention, the stroke of the linear telescopic mechanism can be reduced by using a second cylinder to drive the linear telescopic mechanism to be lifted upwards obliquely or to be perpendicular to the ground downwardly, and the small stroke of the linear telescopic mechanism and the installation of the mechanism below the frame can further avoid the problem of excessively large stroke of a single cylinder required by lifting height to affect the upper slewing space of the carriage. In addition, one or more embodiments can optimize the bearing means at the hinge points of the traveling mechanism to some extent, so that the support load can be transmitted vertically to the frame, solving the problem of excessively large load at the hinge points to result in crack and damage of local structures.

### Brief Description of the Drawings

Fig. 1 is a schematic view of a bridge inspection vehicle traveling mechanism in a retracted state in an embodiment provided by the disclosure;
Fig. 2 is a schematic view of a bridge inspection vehicle traveling mechanism in a working state in an embodiment provided by the disclosure;
Fig. 3 is an axonometric schematic view of a sliderof a bridge inspection vehicle traveling mechanism provided in an embodiment of the disclosure;
Fig. 4 is an axonometric schematic view of a slide rail of a bridge inspection vehicle traveling mechanism provided in an embodiment of the disclosure;
Fig. 5 is an axonometric schematic view of a second carrierof a bridge inspection vehicle traveling mechanism provided in an embodiment of the disclosure;
Fig. 6 is a schematic view of a bridge inspection vehicle traveling mechanism in a retracted state in another embodiment provided by the disclosure;
Fig. 7 is a schematic view of a bridge inspection vehicle traveling mechanism in a working state in another embodiment provided by the disclosure;
Fig. 8 is a broken-out section view of a linear telescopic mechanism provided in the embodiment of Fig.6.

The reference signs in the figures:
1-first support; 2-first cylinder; 3-lug; 4-roller carrier; 5-roller; 6-link rod; 7-slider; 8-slide rail; 9-second cylinder; 10-second support; 11-frame; 12-support leg; 13-telescopic leg; 14-slider group; 71-slide plate; 72-connecting plate; 81-top plate; 82-side plate; 83-bottom plate; 101-vertical support plate; 102-transverse support plate.

### Detailed Description of Embodiments

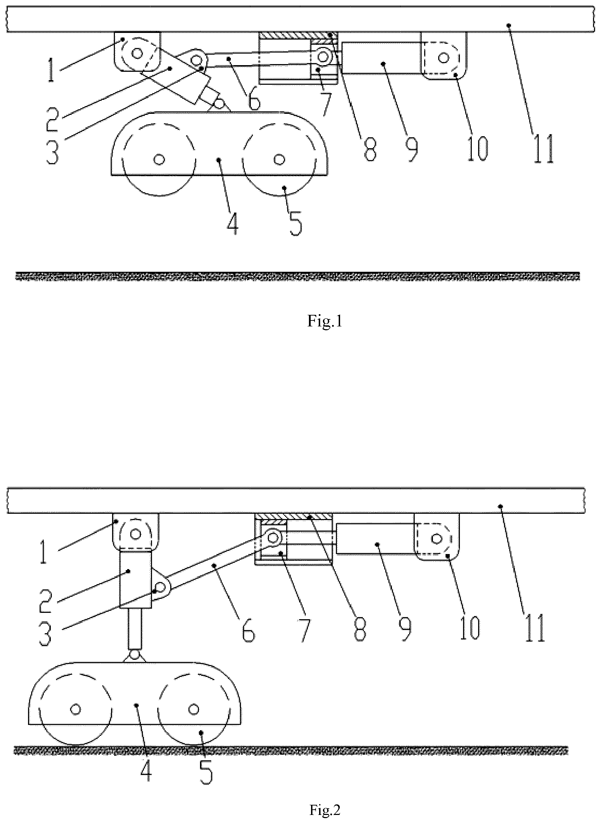

Figs. 1 and 2 are a schematic embodiment of a bridge inspection vehicle traveling mechanism as provided by the disclosure, in which the bridge inspection vehicle traveling mechanism includes a frame 11 and a traveling member.

The bridge inspection vehicle traveling mechanism also includes a linear telescopic mechanism, one end thereof being hinged to the frame11 and the other end thereof being hinged to the traveling member, and the linear telescopic mechanism for driving the traveling member to be retracted upwardly or to be grounded downwardly. The bridge inspection vehicle traveling mechanism also includes a second cylinder 9, a cylinder barrel thereof being hinged to the frame 11 and a cylinder rod thereof being rotatable connected to an exterior of the linear telescopic mechanism, the second cylinder 9 for driving the linear telescopic mechanism to be lifted upwards obliquely or to be perpendicular to the ground downwardly.

In the above-described bridge inspection vehicle traveling mechanism provided by one or more embodiments, the first cylinder 2 is driven by the second cylinder 9 to rotate about a hinge point between the first cylinder 2 and the frame 11, so as the first cylinder 2 can be switched between a position where the first cylinder 2 is lifted upwards obliquely, and a position where the first cylinder 2 is perpendicular to the ground downwardly, reducing the stroke of the first cylinder 2; as the first cylinder 2 has a small stroke and is installed below the frame 11, it is possible to avoid the problem that a single cylinder has excessively large stroke required by lifting height to affect the upper slewing space of the carriage.

Further, in the above-described bridge inspection vehicle traveling mechanism provided by some embodiments, the first cylinder 2 as the linear telescopic mechanism can be perpendicular to the ground in the working state, so that the support load can be transmitted through the first cylinder 2, optimizing the load-bearing means at the hinge point of the traveling mechanism and allowing the support load to be transmitted vertically to the frame 11, thereby solving the problem of ultra-large load at the hinge point and crack and damage of local structures.

The second cylinder 9 is hinged to the exterior of the linear telescopic mechanism indirectly, i.e. the bridge inspection vehicle traveling mechanism includes a link rod 6, a cylinder barrel of the second cylinder 9 is hinged to the frame 11 and the cylinder rod of the second cylinder 9 is hinged to one end of the link rod 6, and the other end of the link rod 6 is hinged to the cylinder barrel of the first cylinder 2. The arrangement of the link rod 6 to connect the cylinder rod of the second cylinder 9 with the cylinder barrel of the first cylinder 2 not only can effectively realize retraction of the traveling mechanism but can meet the requirement for ground clearance within a relatively large range.

The bridge inspection vehicle traveling mechanism further includes a slider 7 and a slide rail 8, wherein the slide rail 8 is fixedly connected to a lower surface of the frame 11, and the slider 7 is slidable along the slide rail 8 and hinged with the cylinder rod of the second cylinder 9. The second cylinder 9 supplies power to drive the slider 7 to slide within the slide rail 8, the slider 7 brings the link rod 6 into movement and thereby drives the first cylinder 2 to rotate so that the first cylinder 2 is perpendicular to the ground, and the rollers 5 are brought into contact with the ground to bear load by expansion of the first cylinder 2. In the above-mentioned embodiment, the arrangement of the slider 7 and the slide rail 8 to support the second cylinder 9 can reduce the load at the hinge point between the second cylinder 9 and the frame 11, avoiding the problem that the load at the hinge point is excessively large to result in crack and damage of the local structures. Further, by providing the slider 7 and the slide rail 8 to guide the movement of the cylinder rod of the second cylinder 9 and the link rod 6, the second cylinder 9 is enabled to extend and retract stably, thereby allowing the first cylinder 2 to be more stably lifted upwards and perpendicular to the ground.

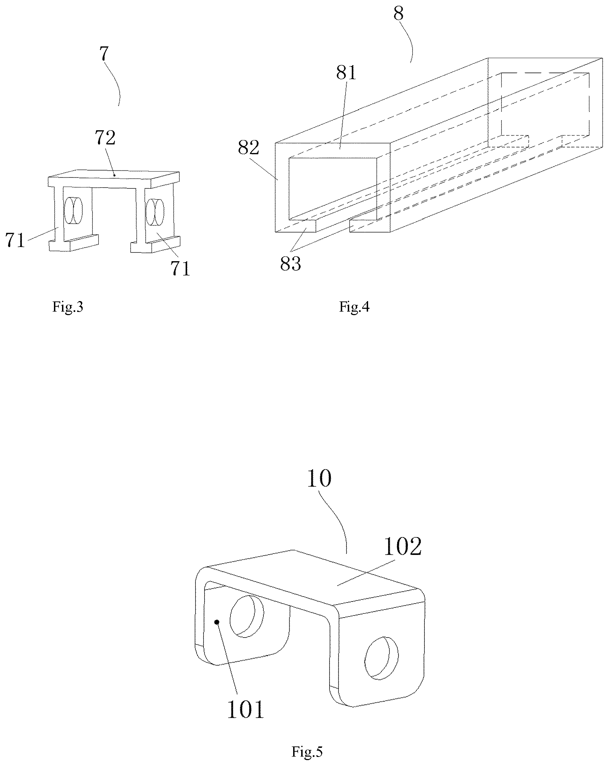

As shown in Fig.4, the slide rail 8 according to the invention includes a top plate 81 fixedly connected to the frame 11, two side plates 82 for enclosing the slider 7 arranged at two sides of the top plate 81 repsecitvely, the bottom portions of the two side plates 82 both extend inwardly to form two bottom plates 83 for supporting the slider 7, and between the two bottom plates 83 is formed a gap for allowing running of the link rod 6. With such a gap, the link rod 6 brought into movement by the slider 7 in the sliding process may not interfere with the slide rail 8.

As shown in Fig.3, in a preferred or an alternative embodiment, the slider 7 may includes two slide plates 71 slidable on the two bottom plates 83 of the slide rail 8 respectively, the two slide plates 71 being connected by a connecting plate 72 and having a hinge shaft penetrated therethrough, the link rod 6 being hinged with the cylinder rod of the second cylinder 9 through the hinge shaft, and between the two slide plates 71 is also formed a gap for allowing running of the link rod 6. With such a gap, the link rod 6 brought into movement by the slider 7 in the sliding process may not interfere with the slider 7 per se.

According to the invention, the cylinder rod of the second cylinder 9 is arranged in the slide rail 8, and can be supported by the slide rail 8, thereby reducing the load at the hinge point between the second cylinder 9 and the frame 11; further, the cylinder rod of the second cylinder 9 and the link rod 6 are hinged through the hinge shaft on the slider 7, and the slider 7 moves along the slide rail 8, thereby capable of guiding movement of the cylinder rod of the second cylinder 9 and the link rod 6.

In the bridge inspection vehicle traveling mechanism provided in one or more embodiments, the first cylinder 2 may further be hinged to a first support 1 welded on the frame 11, the second cylinder 9 is hinged to a second support 10 welded on the frame 11, and the second cylinder 9 is hinged via the link rod 6 to a lug 3 welded on the cylinder barrel of the first cylinder 2.

As shown in Fig.5, the second support 10 in the above-mentioned embodiment may include two vertical support plates 101, the vertical support plates are connected by a transverse support plate 102 which is welded to the frame 11, the cylinder barrel of the second cylinder 9 is arranged between the two vertical support plates 101, and the two vertical support plates 101 are hinged to the cylinder barrel of the second cylinder 9 by insertion of a hinge shaft; the cylinder rod of the second cylinder 9 is located within the slide rail 8 and hinged to the slider 7, and the second cylinder 9 is in horizontal state under supporting of the second support 10 as well as the slide rail 8 and the slider 7, reducing the load at the hinge point between the second cylinder 9 and the frame 11. In the working state, there is substantially no load at the hinge point between the second cylinder 9 and the frame 11, and the vertical load is transmitted to the frame 11 through the first cylinder 2, thereby solving the problem that the load at the hinge point is excessively large to result in crack and damage of the local structures.

The traveling member in the above-described schematic embodiment may be a roller structure, which may include a roller carrier 4 hinged with the first cylinder 2, and rollers 5 arranged inside the roller carrier 4, wherein there are two or more rollers 5 arranged inside the roller carrier 4.

Alternatively, the traveling member in the above-described schematic embodiment may also be a track structure.

The bridge inspection vehicle traveling mechanism provided in one or more embodiments may further include a hydraulic system in driving connection with the traveling member, and the entire vehicle can be moved forward and backward in operation by driving of the hydraulic system.

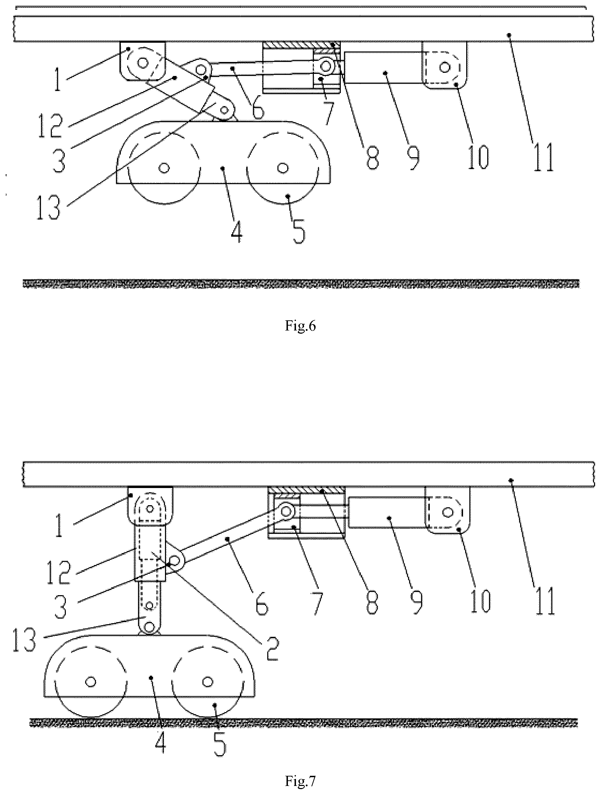

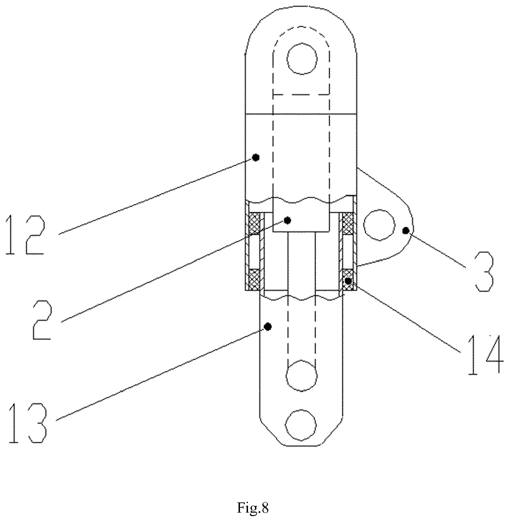

In the above-described embodiments, the linear telescopic mechanism is a first cylinder 2, the extension and retraction of which can drive the traveling member to be retracted or grounded. In consideration of the insufficient capacity of the cylinder to withstand radial forces or bending moments by itself, the disclosure also provides another embodiment of a bridge inspection vehicle traveling mechanism with a linear telescopic mechanism, the linear telescopic mechanism can be a telescopic leg structure. As shown in Figs.6-8, the telescopic leg structure includes a support leg 12 hinged to the frame 11 and a telescopic leg 13 extendable or retractable within the support leg 12. Further, within the support leg 12 and the telescopic leg 13 is provided a first cylinder 2, the cylinder barrel of which is hinged to the frame 11 or the support leg 12, and the cylinder rod of which is connected to the telescopic leg 13, and the telescopic leg 13 is driven to extend or retract relative to the support leg 12 by the extension and retraction of the cylinder rod of the first cylinder 2.

Such telescopic leg structure can withstand radial forces or bending forces apart from axial forces, as for the bridge inspection vehicle, the linear telescopic mechanism will withstand not only axial force but also the radial forces or bending moments from the second cylinder 9 and the traveling member. Further, such structure can allow the first cylinder 2 to have a smaller size, thereby reducing costs.

In order to allow the telescopic leg 13 to slide smoothly within the support leg 12 to reduce the load of the first cylinder 2, a slider group 14 may further be fixedly arranged inside the support leg 12, through which slider group 14 the telescopic leg 13 contacts and slides relative to the support leg 12.

The operation method for the bridge inspection vehicle traveling mechanism provided by the disclosure will be described in detail below based on the embodiments as shown in Figs. 1-2 and 6-8.

In the embodiments shown in Figs. 1-2, before the bridge inspection vehicle carries out the bridge inspection operation, the traveling mechanism is in a retracted state, in which the second cylinder 9 is in the fully retracted state, the slider 7 is located at the rightmost side of the slide rail 8 at the position as shown in Figs. 1 and 2, the first cylinder 2 is also in the fully retracted state, and the entire traveling mechanism is spaced from the ground at a certain height.

When the bridge inspection vehicle is about to perform bridge inspection operation, the traveling mechanism needs to be adjusted to the working state: firstly, the second cylinder 9 is gradually extended from the fully retracted state to drive the slider 7 to move leftwards horizontally within the slide rail 8, the link rod 6 hinged to the slider 7 brings the first cylinder 2 into rotation, and by controlling the extension of the second cylinder 9, the first cylinder 2 in the fully retracted state is changed gradually from the inclined state to a state of being perpendicular to the ground; and when the second cylinder 9 is in the fully extended state, the slider 7 is located at the leftmost side of the slide rail 8 (at position as shown in Figs.1 and 2), and the first cylinder 2 is changed into the state of being perpendicular to the ground; the first cylinder 2 is controlled so that it changes gradually from a fully retracted state to a fully extended state, and the entire traveling mechanism is supported on the ground to get into working state to thereby effectuate load bearing function; the rollers 5 in the traveling mechanism move forward or backward under the driving of the hydraulic system to realize forward or backward movement of the bridge inspection vehicle to thereby accomplish traveling function of the entire vehicle.

After the bridge inspection vehicle finishes the bridge inspection operation, the traveling mechanism is needed to switch from the working state to the non-working state: firstly, the first cylinder 2 is retracted to be changed from the fully extended state to the fully retracted state, so that the traveling mechanism does not bear load any more; then, the second cylinder 9 is retracted to drive the slider 7 to move horizontally, and the slider 7 moves gradually from the left side to the right side along the slide rail 8, and meanwhile the link rod 6 drives the first cylinder 2 in the fully retracted state to rotate so that the first cylinder 2 switches from the state of being perpendicular to the ground to an upwardly inclined state, resulting in that the entire traveling mechanism is spaced from the ground at a certain height; when the second cylinder 9 is changed from the fully extended state to the fully retracted state, the traveling mechanism is retracted to get into the non-working state.

The above-mentioned process is the movement process of the traveling mechanism from the non-working state to the working state, and then from the working state to the non-working state.

In the embodiment shown in Figs. 6-8, before the bridge inspection vehicle carries out the bridge inspection operation, the traveling mechanism is in a retracted state, in which the second cylinder 9 is in the fully retracted state, the slider 7 is located at the rightmost side of the slide rail 8, the first cylinder 2 is in the fully retracted state to drive the telescopic leg 13 to be completely retracted within the support leg 12, and the entire traveling mechanism is suspended from the ground at a certain height.

When the bridge inspection vehicle is about to perform bridge inspection operation, the traveling mechanism needs to be adjusted to the working state: firstly, the second cylinder 9 is gradually extended from the fully retracted state to drive the slider 7 to move leftwards horizontally within the slide rail 8, the link rod 6 hinged to the slider 7 swings, and the support leg 12 hinged to the link rod 6 is driven to rotate about the hinge point, and the first cylinder 2 in the fully constricted state is changed gradually from an inclined state to a state of being perpendicular to the ground by controlling the extension of the second cylinder 9; and when the second cylinder 9 is in the fully extended state, the slider 7 is located at the leftmost side of the slide rail 8, and the support leg 12 and the telescopic leg 13 are changed into the state of being perpendicular to the ground; the first cylinder 2 is controlled so that it changes gradually from a fully retracted state to a fully extended state, and the first cylinder 2 drives the telescopic leg 13 to extend out of the support leg 12 until the entire traveling mechanism is supported on the ground to effectuate the load bearing function; under the driving of the hydraulic system, the rollers 5 in the traveling mechanism move forward or backward to realize forward or backward movement of the bridge inspection vehicle to thereby accomplish traveling function of the entire vehicle.

After the bridge inspection vehicle finishes the bridge inspection operation, the traveling mechanism is needed to switch from the working state to the non-working state: firstly, the first cylinder 2 is retracted so that it changes from the fully extended state to the fully retracted state to drive the telescopic leg 13 to be retracted within the support leg 12, and at that moment the traveling mechanism does not bear load any more; then, the second cylinder 9 is retracted to drive the slider 7 to move horizontally, and the slider 7 moves gradually from the left side to the right side along the slide rail 8, and meanwhile the link rod 6 drives the support leg in the fully retracted state to rotate so that the support leg changes from the state of being perpendicular to the ground to an upwardly inclined state, resulting in that the entire traveling mechanism is spaced from the ground at a certain height; when the second cylinder 9 is switched from the fully extended state to the fully retracted state, the traveling mechanism is retracted to get into the non-working state.

The above-mentioned process is the movement process of the traveling mechanism from the non-working state to the working state, and then from the working state to the non-working state.

In view of the above, the disclosure optimizes the swing action and load bearing performance of the traveling mechanism by arrangement of the slide rail 8, the slider 7 and the link rod 6, solves the deficiencies of the traveling mechanism in the prior art, and meets the requirement for ground clearance of the traveling mechanism in the non-working state, and with arrangement of the entire traveling mechanism under the frame 11, solves the problem of limited the upper slewing space of the carriage. The disclosure also provides a schematic embodiment of a bridge inspection vehicle, in which the bridge inspection vehicle includes a bridge inspection vehicle traveling mechanism according to any one of the proceeding embodiments.

## Claims

1. A bridge inspection vehicle traveling mechanism, comprising:
a frame (11);
a traveling member;
a link rod (6);
a linear telescopic mechanism, one end thereof being hinged to the frame (11) and the other end thereof being hinged to the traveling member, and the linear telescopic mechanism for driving the traveling member to be retracted upwardly or to be grounded downwardly;
a second cylinder (9), a cylinder barrel thereof being hinged to the frame (11) and a cylinder rod thereof being hinged to one end of the link rod (6), and the other end of the link rod (6) being hinged to an exterior of the linear telescopic mechanism, the second cylinder (9) for driving the linear telescopic mechanism to be lifted upwards obliquely or to be perpendicular to the ground downwardly;
a slide rail (8), being fixedly connected to a lower surface of the frame (11) ; the cylinder rod of the second cylinder (9) is arranged in the slide rail (8); anda slider (7), being slidable in the slide rail (8), the cylinder rod of the second cylinder (9) and one end of the link rod (6) are hinged to the slider (7);
wherein the slide rail (8) comprising: a top plate (81), being fixedly connected to the lower surface of the frame (11), and
two side plates (82), being arranged at two sides of the top plate (81) respectively for enclosing the slider (7), the bottom portions of the two side plates (82) both extend inwardly to form two bottom plates (83) for supporting the slider (7), and between the two bottom plates (83) is formed a gap for allowing running of the link rod (6).

2. The bridge inspection vehicle traveling mechanism according to claim 1, wherein the linear telescopic mechanism is a first cylinder (2), a cylinder barrel thereof being hinged to the frame (11), and a cylinder rod thereof being hinged to the traveling member.

3. The bridge inspection vehicle traveling mechanism according to claim 1, wherein the linear telescopic mechanism is a telescopic leg structure, comprising a support leg (12) hinged to the frame (11) and a telescopic leg (13) extendable or retractable within the support leg (12); within the support leg (12) and the telescopic leg (13) is provided a first cylinder (2), a cylinder barrel of the first cylinder (2) being hinged to the frame (11) or the support leg (12), and a cylinder rod of the first cylinder (2) connected to the telescopic leg (13); and the telescopic leg (13) is configured to be driven to extend or retract relative to the support leg (12) by the extension or retraction of the cylinder rod of the first cylinder (2).

4. The bridge inspection vehicle traveling mechanism according to claim 1, wherein the slider (7) comprising two slide plates (71) slidable on the two bottom plates (83) respectively, the two slide plates (71) being connected by a connecting plate (72) and having a hinge shaft penetrated therethrough, the link rod (6) being hinged with the cylinder rod of the second cylinder (9) through the hinge shaft, and between the two slide plates (71) is also formed a gap for allowing running of the link rod (6).

5. The bridge inspection vehicle traveling mechanismaccording to any one of claims 1 to 3, wherein the linear telescopic mechanism being hinged to a first support (1) arranged on the frame (11), the second cylinder (9) being hinged to a second support (10) arranged on the frame (11) and being hinged to a lug (3) arranged on the exterior of the linear telescopic mechanism.

6. The bridge inspection vehicle traveling mechanism according to claim 5, wherein the second support (10) comprises two vertical support plates (101) connected by a transverse support plate (102), the transverse support plate (102) being welded to the frame (11), the cylinder barrel of the second cylinder (9) being arranged between the two vertical support plates (101), and the two vertical support plates (101) being hinged to the cylinder barrel of the second cylinder (9) by a hinge shaft.

7. The bridge inspection vehicle traveling mechanism according to any one of claims 2 to 3, wherein the traveling member is a roller structure, comprising a roller carrier (4) hinged to the first cylinder (2) and rollers (5) arranged inside the roller carrier (4).

8. The bridge inspection vehicle traveling mechanism according to claim 3, wherein a slider group (14) is fixedly arranged in the support leg (12), the telescopic leg (13) is configured to contact and be slidable relative to the support leg (12) through the slider group (14).

9. A bridge inspection vehicle, comprising a bridge inspection vehicle traveling mechanism according to any one of claims 1 to 8.

## Patentansprüche

1. Fahrmechanismus für ein Brückeninspektionsfahrzeug, umfassend:
einen Rahmen (11);
ein Fahrelement;
eine Verbindungsstange (6);
einen linearen Teleskopmechanismus, wobei ein Ende davon an dem Rahmen (11) eingehängt ist und das andere Ende davon an dem Fahrelement eingehängt ist, und wobei der lineare Teleskopmechanismus zum Antreiben des Fahrelements aufwärts eingezogen oder abwärts geerdet werden soll;
einen zweiten Zylinder (9), wobei ein Zylindermantel davon an dem Rahmen (11) eingehängt ist und eine Zylinderstange davon an einem Ende der Verbindungsstange (6) eingehängt ist, und das andere Ende der Verbindungsstange (6) an einer Außenseite des linearen Teleskopmechanismus eingehängt ist, wobei der zweite Zylinder (9) zum Antreiben des linearen Teleskopmechanismus schräg aufwärts oder abwärts senkrecht zum Boden gehoben werden soll;
eine Gleitschiene (8), welche mit einer unteren Oberfläche des Rahmens (11) fix verbunden ist; die Zylinderstange des zweiten Zylinders (9) in der Gleitschiene (8) angeordnet ist; und ein Gleitstück (7) gleitbar in der Gleitschiene (8) ist, die Zylinderstange des zweiten Zylinders (9) und ein Ende der Verbindungsstange (6) an dem Gleitstück (7) eingehängt sind;
wobei die Gleitschiene (8) umfasst: eine Kopfplatte (81), welche mit der unteren Oberfläche des Rahmens (11) fix verbunden ist, und
zwei Seitenplatten (82), welche jeweils an zwei Seiten der Kopfplatte (81) angeordnet sind, um das Gleitstück (7) zu umschließen, wobei die unteren Abschnitte der zwei Seitenplatten (82) sich beide einwärts erstrecken, um zwei Grundplatten (83) zu bilden, um das Gleitstück (7) zu stützen, und zwischen den zwei Grundplatten (83) ein Spalt gebildet wird, um die Bewegung der Verbindungsstange (6) zu erlauben.

2. Fahrmechanismus für ein Brückeninspektionsfahrzeug nach Anspruch 1, wobei der lineare Teleskopmechanismus ein erster Zylinder (2) ist, wobei ein erster Zylindermantel davon auf dem Rahmen (11) eingehängt ist, und eine Zylinderstange davon auf dem Fahrelement eingehängt ist.

3. Fahrmechanismus für ein Brückeninspektionsfahrzeug nach Anspruch 1, wobei der lineare Teleskopmechanismus eine Teleskopschenkelstruktur ist, welche einen Lagerschenkel (12), welcher auf dem Rahmen (11) eingehängt ist, und einen Teleskopschenkel (13), welcher innerhalb des Lagerschenkels (12) ausziehbar oder einziehbar ist, umfasst; innerhalb des Lagerschenkels (12) und des Teleskopschenkels (13) ein erster Zylinder (2) bereitgestellt ist, ein Zylindermantel des ersten Zylinders (2) an dem Rahmen (11) oder dem Lagerschenkel (12) eingehängt ist, und eine Zylinderstange des ersten Zylinders (2) mit dem Teleskopschenkel (13) verbunden ist; und der Teleskopschenkel (13) konfiguriert ist, um angetrieben zu werden, um sich relativ zu dem Lagerschenkel (12) durch den Auszug oder Einzug der Zylinderstange des ersten Zylinders (2) auszuziehen oder einzuziehen.

4. Fahrmechanismus für ein Brückeninspektionsfahrzeug nach Anspruch 1, wobei das Gleitstück (7) zwei Gleitplatten (71) umfasst, welche jeweils gleitbar auf den zwei Grundplatten (83) sind, wobei die zweit Gleitplatten (71) durch eine Verbindungsplatte (72) verbunden sind und einen Einhängeschaft hindurch geführt haben, wobei die Verbindungsstange (6) mit der Zylinderstange des zweiten Zylinders (9) durch den Einhängeschaft eingehängt ist, und zwischen den zwei Gleitplatten (71) auch ein Spalt gebildet wird, um die Bewegung der Verbindungsstange (6) zu erlauben.

5. Fahrmechanismus für ein Brückeninspektionsfahrzeug nach einem der Ansprüche 1 bis 3, wobei der lineare Teleskopmechanismus an einem ersten Lager (1) eingehängt ist, welches auf dem Rahmen (11) eingehängt ist, wobei der zweite Zylinder (9) auf einem zweiten Lager (10) eingehängt ist, welches auf dem Rahmen (11) angeordnet ist und welches an einer Öse (3) eingehängt ist, welche an der Außenseite des linearen Teleskopmechanismus angeordnet ist.

6. Fahrmechanismus für ein Brückeninspektionsfahrzeug nach Anspruch 5, wobei das zweite Lager (10) zwei vertikale Lagerplatten (101) umfasst, welche durch eine transversale Lagerplatte (102) verbunden sind, wobei die transversale Lagerplatte (102) an den Rahmen (11) geschweißt ist, wobei der Zylindermantel des zweiten Zylinders (9) zwischen den zwei vertikalen Lagerplatten (101) angeordnet ist, und die zwei vertikalen Lagerplatten (101) an dem Zylindermantel des zweiten Zylinders (9) durch einen Einhängeschaft eingehängt sind.

7. Fahrmechanismus für ein Brückeninspektionsfahrzeug nach einem der Ansprüche 2 bis 3, wobei das Fahrelement eine Radstruktur ist, welche einen Radträger (4), welcher an dem ersten Zylinder (2) eingehängt ist, und Räder (5), welche innerhalb des Radträgers (4) angeordnet sind, umfasst.

8. Fahrmechanismus für ein Brückeninspektionsfahrzeug nach Anspruch 3, wobei eine Gleitstückgruppe (14) in dem Lagerschenkel (12) fix angeordnet ist, der Teleskopschenkel (13) konfiguriert ist, den Lagerschenkel (12) zu kontaktieren und relativ dazu durch die Gleitstückgruppe (14) gleitbar zu sein.

9. Brückeninspektionsfahrzeug, umfassend einen Fahrmechanismus für ein Brückeninspektionsfahrzeug nach einem der Ansprüche 1 bis 8.

## Revendications

1. Mécanisme de déplacement de véhicule d'inspection de pont, comprenant :
un châssis (11) ;
un élément de déplacement ;
une barre de liaison (6) ;
un mécanisme télescopique linéaire, une extrémité de celui-ci étant articulée sur le châssis (11) et l'autre extrémité de celui-ci étant articulée sur l'élément de déplacement, et le mécanisme télescopique linéaire servant à entraîner l'élément de déplacement pour qu'il soit rétracté vers le haut ou pour qu'il soit mis au sol vers le bas ;
un second cylindre (9), un fût de cylindre de celui-ci étant articulé sur le châssis (11) et une tige de cylindre de celui-ci étant articulée sur une extrémité sur la barre de liaison (6), et l'autre extrémité de la barre de liaison (6) étant articulée sur un extérieur du mécanisme télescopique linéaire, le second cylindre (9) servant à entraîner le mécanisme télescopique linéaire pour qu'il se soulève vers le haut obliquement ou qu'il soit perpendiculaire au sol vers le bas ;
un rail glissière (8), connecté de manière fixe à une surface inférieure du châssis (11) ; la tige de cylindre du second cylindre (9) est agencée dans le rail glissière (8) ; et un coulisseau (7), pouvant coulisser dans le rail glissière (8), la tige de cylindre du second cylindre (9) et une extrémité de la barre de liaison (6) sont articulées sur le coulisseau (7) ; dans lequel le rail glissière (8) comprend : une plaque supérieure (81), connectée de manière fixe à la surface inférieure du châssis (11), et
deux plaques latérales (82), agencées sur deux côtés de la plaque supérieure (81) respectivement pour enfermer le coulisseau (7), les parties inférieures des deux plaques latérales (82) s'étendent toutes deux vers l'intérieur pour former deux plaques inférieures (83) pour supporter le coulisseau (7), et entre les deux plaques inférieures (83) est formé un espace pour permettre le fonctionnement de la barre de liaison (6).

2. Mécanisme de déplacement de véhicule d'inspection de pont selon la revendication 1, dans lequel le mécanisme télescopique linéaire est un premier cylindre (2), un fût de cylindre de celui-ci étant articulé sur le châssis (11), et une tige de cylindre de celui-ci étant articulée sur l'élément de déplacement.

3. Mécanisme de déplacement de véhicule d'inspection de pont selon la revendication 1, dans lequel le mécanisme télescopique linéaire est une structure de jambe télescopique, comprenant une jambe de support (12) articulée sur le châssis (11) et une jambe télescopique (13) extensible ou rétractable à l'intérieur de la jambe de support (12) ; à l'intérieur de la jambe de support (12) et de la jambe télescopique (13) est fourni un premier cylindre (2), un fût de cylindre du premier cylindre (2) étant articulé sur le châssis (11) ou la jambe de support (12), et une tige de cylindre du premier cylindre (2) étant connectée à la jambe télescopique (13) ; et la jambe télescopique (13) est configurée pour être entraînée afin de s'étendre ou de se rétracter par rapport à la jambe de support (12) par l'extension ou la rétraction de la tige de cylindre du premier cylindre (2).

4. Mécanisme de déplacement de véhicule d'inspection de pont selon la revendication 1, dans lequel le coulisseau (7) comprend deux plaques coulissantes (71) pouvant coulisser sur les deux plaques inférieures (83) respectivement, les deux plaques coulissantes (71) étant connectées par une plaque de connexion (72) et présentant un arbre d'articulation pénétrant à travers, la barre de liaison (6) étant articulée avec la tige de cylindre du second cylindre (9) par l'intermédiaire de l'arbre d'articulation, et entre les deux plaques coulissantes (71) est également formé un espace pour permettre le fonctionnement de la barre de liaison (6).

5. Mécanisme de déplacement de véhicule d'inspection de pont selon l'une quelconque des revendications 1 à 3, dans lequel le mécanisme télescopique linéaire est articulé sur un premier support (1) agencé sur le châssis (11), le second cylindre (9) étant articulé sur un second support (10) agencé sur le châssis (11) et articulé sur une oreille (3) agencée à l'extérieur du mécanisme télescopique linéaire.

6. Mécanisme de déplacement de véhicule d'inspection de pont selon la revendication 5, dans lequel le second support (10) comprend deux plaques de support verticales (101) connectées par une plaque de support transversale (102), la plaque de support transversale (102) étant soudée au châssis (11), le fût de cylindre du second cylindre (9) étant agencé entre les deux plaques de support verticales (101), et les deux plaques de support verticales (101) étant articulées sur le fût de cylindre du second cylindre (9) par un arbre d'articulation.

7. Mécanisme de déplacement de véhicule d'inspection de pont selon l'une quelconque des revendications 2 à 3, dans lequel l'élément de déplacement est une structure à rouleaux, comprenant un porte-rouleaux (4) articulé sur le premier cylindre (2) et des rouleaux (5) agencés à l'intérieur du porte-rouleaux (4).

8. Mécanisme de déplacement de véhicule d'inspection de pont selon la revendication 3, dans lequel un groupe de coulisseaux (14) est agencé de manière fixe dans la jambe de support (12), la jambe télescopique (13) est configurée pour entrer en contact et être coulissante par rapport à la jambe de support (12) par l'intermédiaire du groupe de coulisseaux (14).

9. Véhicule d'inspection de pont, comprenant un mécanisme de déplacement de véhicule d'inspection de pont selon l'une quelconque des revendications 1 à 8.
